# EUROPÄISCHE PATENTSCHRIFT

(11) **EP 1 290 629 B1**
(45) Veröffentlichungstag und Bekanntmachung des Hinweises auf die Patenterteilung: **28.07.2004**
(21) Anmeldenummer: 01960243.2
(22) Anmeldetag: 25.05.2001
(51) Int. Cl.: G06K 7/10, G06K 19/16

(54) **VORRICHTUNG ZUR AUSWERTUNG VON ECHTHEITSMERKMALEN MIT BEUGUNGSSTRUKTUR**
DEVICE FOR EVALUATING AUTHENTICITY FEATURES THAT HAVE A DIFFRACTION STRUCTURE
DISPOSITIF POUR EVALUER DES CARACTERISTIQUES D'AUTHENTICITE PRESENTANT UNE STRUCTURE DE DIFFRACTION

(30) Priorität: 07.06.2000 DE 10028239
(43) Veröffentlichungstag der Anmeldung: 12.03.2003
(73) Patentinhaber: Bundesdruckerei GmbH, 10958 Berlin (DE)
(72) Erfinder: FRANZ-BURGHOLZ, Arnim, 14612 Falkensee (DE); GUTMANN, Roland, 14612 Falkensee (DE); HOEPPNER, Harald, 12309 Berlin (DE); LÖER, Thomas, 10961 Berlin (DE); MÄRTENS, Detlef, 13599 Berlin (DE); DAUSMANN, Günther, 85435 Erding (DE); YANG, Zishao, 85435 Erding (DE); MASSEN, Robert, 78337 Öhningen (DE); FRANZ, Thomas, 78465 Konstanz (DE); LEITNER, Thomas, 78462 Konstanz (DE); EBERHARDT, Jörg, 88069 Tettnang (DE)
(74) Vertreter: Haar, Lucas H., Dipl.-Ing.
(86) Internationale Anmeldenummer: PCT/EP2001/005989
(87) Internationale Veröffentlichungsnummer: WO 2001/095248

(56) Entgegenhaltungen:
- WO-A-95/12860
- WO-A-98/55963
- US-A- 5 461 239
- US-A- 5 508 801

## Beschreibung

Die Erfindung betrifft eine Vorrichtung zur Auswertung von Echtheitsmerkmalen mit Beugungsstruktur nach dem Oberbegriff des Patentanspruchs 1. Eine derartige Vorrichtung ist beispielsweise mit dem Gegenstand WO 98/55963 bekannt geworden.

Dort ist ein zu untersuchendes Dokument auf einer Glasplatte aufgelegt und auf dem Dokument sind auszuwertende Beugungsstrukturen angeordnet. Zur Erkennung dieser Beugungsstrukturen ist ein Laser vorhanden, der mit seinem Strahl auf das in der Dokumentenoberfläche angeordnete Beugungsstruktur trifft, das den Strahl charakteristisch in Form eines Muster beugt und reflektiert. Das so erzeugte Beugungsmuster wird auf in einem Gehäuse fest positionierte Fotodioden projiziert. Diese sind an den Stellen im Gehäuse platziert, an denen das charakteristische Beugungsmuster zu erwarten ist. Je nach dem, ob eine Fotodiode ein Beugungsmuster empfängt oder nicht, wird dann über die Echtheit des Dokumentes entschieden.

Nachteil der bekannten Vorrichtung ist jedoch, dass die Fotodioden an bestimmten, fest positionierten Orten im Dokumentenprüfgerät angeordnet sein müssen, und vorausgesetzt wird, dass die Fotodioden genau an diesem Ort das Beugungsmuster empfangen. Wenn allerdings die Beugungsstruktur auf der Dokumentenoberfläche leicht verschoben oder verändert ist, oder ein anderer Typ einer Beugungsstruktur auf einem anderen Dokument gegeben ist, werden die an festen Orten positionierten Fotodioden nichts empfangen. Damit besteht der Nachteil, dass das bekannte Gerät nur mit begrenztem Einsatzbereich einsetzbar ist, denn es ist im wesentlichen nur für einen einzigen Dokumententyp geeignet.

Zwar ist in der WO 98/55963 auch beschrieben, dass die Fotodioden oder Charge Coupled Devices in Form einer Matrix angeordnet sein können, um einen größeren Bereich von Beugungsmustern zu empfangen, gleichwohl ist es mit festpositionierten Fotodioden nicht ohne weiteres möglich, unterschiedliche Beugungsmuster an unterschiedlichen Orten mit unterschiedlicher Intensität auszuwerten.

Ein weiterer Nachteil der Fotodioden ist die doch sehr grobe Auflösung, welche weit hinter dem sehr hohen Auflösungsvermögen von Matrix- oder Zeilen-Kameras mit lichtempfindlichen CCD- oder DMOS-Sensoren zurückbleiben und daher für kleinere, fein verteilte Echtheitsmerkmale nicht geeignet sind.

Die Druckschrift WO 95/12860 offenbart eine Vorrichtung zur Auswertung von Echtheitsmerkmalen mit Beugungsstrukturen auf einem Dokument. Das Dokument ist auf eine Untersuchungsfläche aufgelegt und wird von einer Lichtquelle angestrahlt. Das zu untersuchende Echtheitsmerkmal beugt den Strahl der Beleuchtungsquelle und projiziert den gebeugten Strahl auf eine Bildfläche. Das von der Beleuchtungsquelle ausgesandte Licht wird mittels eines Linsensystems so fokussiert, dass der gebeugte Strahl die Bildfläche trifft.

Der Erfindung liegt deshalb die Aufgabe zu Grunde, eine Vorrichtung der eingangs genannten Art so weiter zu bilden, dass Echtheitsmerkmale mit Beugungsstrukturen auf einem Dokument in wesentlich größerer Vielfalt erkannt werden können und die Überprüfung der Echtheit eines Dokumentes deshalb unabhängig von dem Ort der Anbringung der Echtheitsmerkmale mit Beugungsstrukturen auf dem Dokument sind.

Zur Lösung der gestellten Aufgabe ist die Vorrichtung dadurch gekennzeichnet, dass eine zur Abbildung des Beugungsmusters vorgesehene Mattscheibe verfahrbar ausgebildet ist und ein darauf fest liegender Spiegel vorgesehen ist, mittels dem die Strahlen der Beleuchtungsquelle in die Strahlen, die auf die Beugungsstruktur auftreffen, umgelenkt werden.

Vorteil der vorgeschlagenen Vorrichtung ist also, dass man nicht mehr fixierte und damit festgelegte Orte für das Auftreffen von Beugungsmustern auf einer Untersuchungsfläche vorsieht, sondern dass es beliebig ist, an welchen Orten die Beugungsmuster auftreffen. Man beobachtet die gesamte Projektionsfläche mit einer Kamera (Matrix- oder Zeilenkamera) und wertet das dort entstehende, charakteristische Beugungsbild aus. Die Auswertung dieses Beugungsbildes ist damit ein Maß für die Echtheit des Dokumentes.

Damit besteht der Vorteil, dass die lichtempfindlichen Sensoren nicht mehr an festgelegten Orten einer Projektionsfläche angeordnet sein müssen, sondern man ist vollkommen frei in der Auswertung unterschiedlichster, auch variabler Beugungsmuster, weil das Beugungsmuster lediglich in seiner Projektion auf eine Produktionsfläche mit einer Kamera untersucht wird.

Damit können unterschiedliche Beugungsstrukturen unterschiedlichster Beschaffenheit und an unterschiedlichen Orten auf dem Dokument gleichzeitig und nacheinander folgend untersucht werden, weil stets lediglich das von der Beugungsstruktur auf die Projektionsfläche geworfene Beugungsmuster mit einer Kamera untersucht wird.

Der Ausdruck "Projektionsfläche" wird weit verstanden. Als Projektionsfläche kann in einer ersten Ausführungsform eine Mattscheibe vorgesehen sein, auf der die Beugungsmuster projiziert werden, wobei unterhalb der Mattscheibe eine Kamera angeordnet ist, welche die Beugungsmuster auf der Mattscheibe auswertet.

Hierbei kann die Kamera nur auf Teilbereiche der Mattscheibe blicken und Teilbereiche auswerten oder es kann die gesamte Fläche der Mattscheibe in einem einzigen Arbeitsgang ausgewertet werden.

Bei der räumlichen Trennung zwischen Kamera und Mattscheibe bleits es offen und wird vom Schutzbereich der vorliegende Erfindung umfasst, ob die Kamera mit der beweglichen Matsscheibe mitfährt oder lediglich die Matsscheibe bei stillstehender Kamera bewegt wird.

Im übrigen gibt es bei der Auswertung einer Beugungsstruktur in einem Dokument mehrere verschiedene Ausführungsformen, die alle von der Erfindung umfasst sind.

In einer ersten Ausgestaltung ist es vorgesehen, dass der zur Beleuchtung der Beugungsstruktur im Dokument vorgesehene Laser lediglich beispielsweise in X-Richtung verfahrbar ausgebildet ist, in Y-Richtung aber starr steht.

In einer anderen Ausgestaltung kann der Laser unbeweglich z.B. am Gehäuse festliegen und selbst nicht auslenkbar sein, wobei die Strahlen des Lasers auf einen Drehspiegel gelenkt werden, welcher Drehspiegel über einen bestimmten Winkelbereich auslenkbar ist. Weiter wird der vom Drehspiegel abgelenkte Laser-Strahl dann über einen entsprechenden, im Gehäuse fest angeordneten, telezentrischen Spiegel auf die Beugungsstruktur im oder auf dem Dokument gelenkt.

Bei beiden Ausführungsformen kann es vorgesehen sein, dass die Mattscheibe in Y-Richtung (Scanrichtung) verfahrbar ausgebildet ist und auf der Mattscheibe ein Ablenkspiegel feststehend angeordnet ist, so dass der von dem Laser erzeugte Strahl über den auf der verfahrbaren Mattscheibe feststehend angeordneten Spiegel auf die feststehende Beugungsstruktur im Dokument geleitet wird.

Bei dieser Ausführungsform ist wesentlich, dass der Ablenkspiegel für den Laserstrahl etwa die gesamte Breite der Mattscheibe einnimmt. Dies ist mit dem Vorteil verbunden, dass die Mattscheibe selbst nicht in Y-Richtung verfahren werden muss.

Eine andere Ausführungsform sieht vor, dass die Breite des Ablenkspiegels wesentlich geringer ist als die Breite der Mattscheibe, so dass die gesamte Mattscheibe sowie in X- als auch in Y-Richtung verfahrbar ausgebildet ist und unter der feststehendem Beugungsstruktur verfahren werden kann, wobei in diesem Ausführungsbeispiel der Laser dann mit der Mattscheibe fest gekoppelt ist.

Bei anderen, nicht zur Erfindung gehörenden Beispielen kann es vorgesehen sein, dass die Mattscheibe unmittelbar entfällt und die von der Beugungsstruktur reflektierten Beugungsmuster unmittelbar auf die Auswertefläche von lichtempfindlichen Sensoren einer unter der Beugungsstruktur verfahrbaren Kamera projiziert werden.

Im folgenden wird die Erfindung anhand von mehrere Ausführungswege darstellenden Zeichnungen näher erläutert. Hierbei gehen aus den Zeichnungen und ihrer Beschreibung weitere empfindungswesentliche Merkmale und Vorteile der Erfindung hervor.

Es zeigen:
- Figur 1:: schematisiert ein ersteS Ausführungsbeispiel nach der Erfindung;
- Figur 2:: schematisiert ein gegenüber Figur 1 abgewandeltes Ausführungsbeispiel;
- Figur 3: eine Ausführungsform der Vorrichtung, die nicht zur Erfindung gehört und
- Figur 4:: eine dritte Ausführungsform der erfindungsgemäßen Vorrichtung.

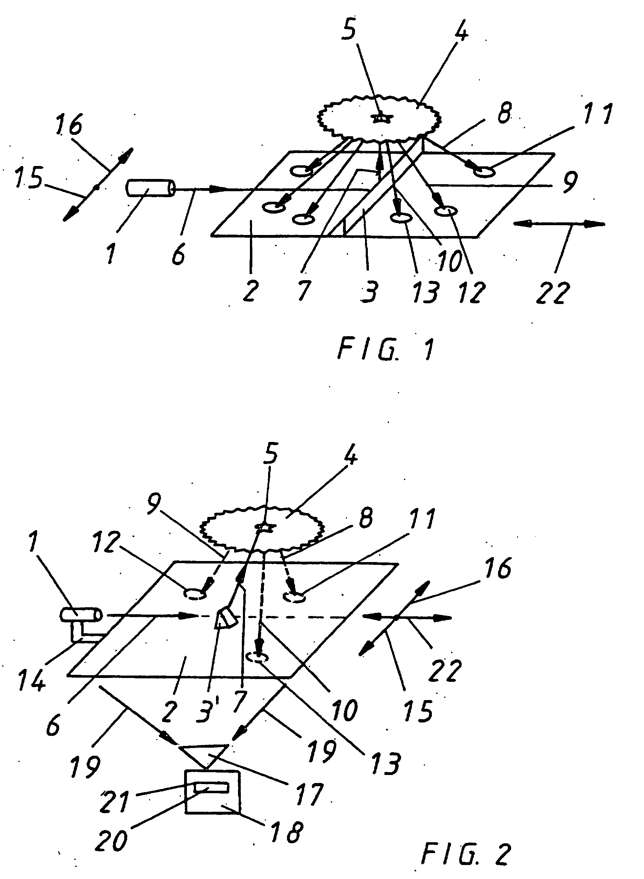

In Figur 1 ist allgemein in einem Gehäuse eines nicht näher dargestellten Dokumentenprüfgerätes ein Laser 1 angeordnet, der einen Strahl 6 in horizontaler Richtung aussendet. Der Laser ist in den Pfeilrichtungen 15, 16 verfahrbar ausgebildet, wobei dies der Bewegung des Lasers in X-Richtung entspricht.

Der vom Laser 1 erzeugte Strahl 6 wird über einen etwa dreoeclsförmig profilierten Spiegel 3 reflektiert und in form eines Strahls 7 gegen ein feststehendes Dokument 26 geleitet, welches beispielsweise eine Struktur 4 aufweisen kann, in deren Bereich eine Beugungsstruktur 5 angeordnet ist.

Selbstverständlich ist die vorliegende Erfindung nicht auf die Anordnung einer Beugungsstruktur 5 im Bereich einer Struktur 4 beschränkt. Es können Beugungsstrukturen 5 auch isoliert in oder auf der Dokumentenoberfläche 26 integriert sein.

Wichtig ist, dass sich der Spiegel 3 über die gesamte Breite einer Mattscheibe 2 erstreckt, die den Spiegel 3 trägt. Die Mattscheibe 2 ist in Scanrichtungen 22 (dies entspricht der Y-Richtung) unter der feststehenden Beugungsstruktur 5 verfahrbar angeordnet.

Der auf die Beugungsstruktur 5 projizierte Strahl 7 des Lasers 1 wird somit in Form der gebeugten Strahlen 8, 9, 10 reflektiert und erzeugt auf der Mattscheibe 2 für die Beugungsstruktur 5 charakteristische Beugungsmuster 11-13.

Die Größe, Intensität und Anordnung der Beugungsmuster 11-13 auf der Mattscheibe 2 ist ein Maß für die Echtheit der Beugungsstruktur 5 auf dem Dokument 26.

Es ist lediglich in Figur 2 dargestellt, dass (wie auch in Figur 1) unterhalb der Mattscheibe 2 eine Matrix-Kamera 18 angeordnet ist, die mit ihrem Objektiv 17 im Strahlengang 19 der Mattscheibe 2 liegt und damit alle auf der Mattscheibe 2 entstehenden Beugungsmuster 11-13 erfasst und mit einem CCD-Chip 20 auswertet.

Die Figur 2 zeigt ein gegenüber Figur 1 abgewandeltes Ausführungsbeispiel, bei dem erkennbar ist, dass der Laser 1 über eine Halterung 14 mit der Mattscheibe 2 verbunden ist. Die Mattscheibe 2 ist in den Pfeilrichtungen 15, 16, sowie auch in den Pfeilrichtungen 22 verfahrbar ausgebildet.

Dieses Ausführungsbeispiel hat den Vorteil, dass lediglich ein relativ kleiner Spiegel 3' vorgesehen sein kann, dessen Länge wesentlich geringer ist als die Breite der Mattscheibe 2, wobei dann allerdings die Mattscheibe 2 in X- und Y-Richtung verfahrbar ausgebildet sein muss.

In diesem Ausführungsbeispiel ist - wie auch anhand der Figur 1 beschrieben - die Kamera 18 unterhalb der Mattscheibe 2 angeordnet, wobei das Beugungsmuster auf die Bildfläche 21 des CCD-Chips 20 projiziert wird.

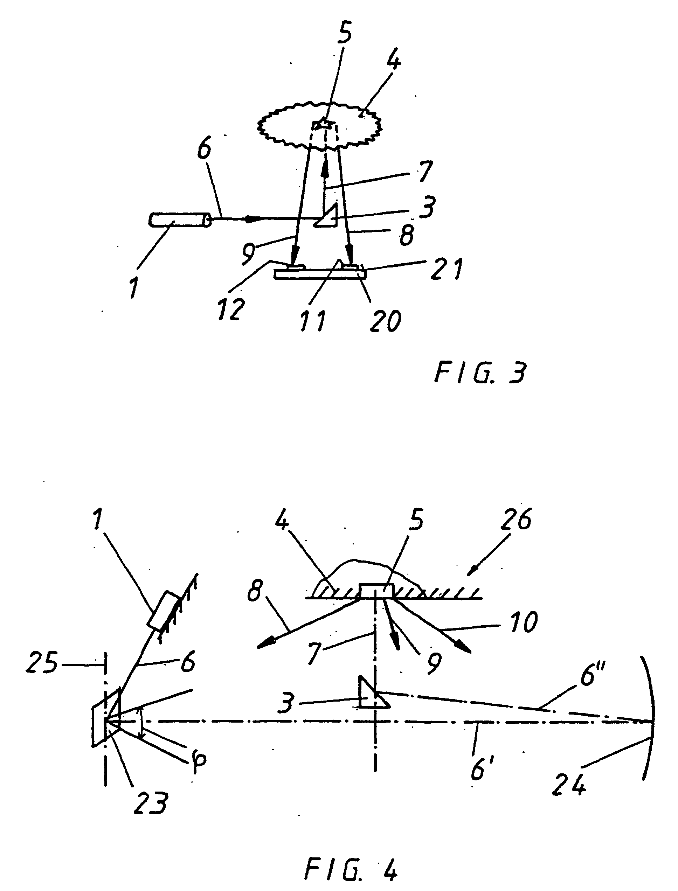

Die Figur 3 zeigt schematisiert ein nicht zur Erfindung gehörendes Beispiel, in dem die Mattscheibe 2 auch vollständig entfällt, wodurch das Beugungsmuster 11-12 unmittelbar auf die Bildfläche 21 des CCD-Chips projiziert wird.

Figur 4 zeigt schematisiert einen Aufbau der erfindungsgemäßen Vorrichtung, wobei hier der Laser 1 am Gehäuse festliegt. Die vom Laser 1 erzeugten Strahlen 6 fallen auf einen Drehspiegel 23, welcher über einen bestimmten Winkelbereich φ um eine Drehachse 25 auslenkbar ist. Der vom Drehspiegel 23 abgelenkte Laser-Strahl 6' wird dann über einen gehäusefesten, telezentrischen Spiegel 24 in den Laser-Strahl 6" umgelenkt und auf einen Umlenkspiegel 3 geführt, von wo er als Laser-Strahl 7 auf das Dokument 26 bzw. dessen Echtheitsmerkmal 4 mit Beugungsstruktur 5 fällt.

### Zeichnungslegende

- 1: Laser
- 2: Mattscheibe
- 3: Spiegel 3'
- 4: Echtheitsmerkmal
- 5: Beugungsstruktur
- 6: Strahl
- 7: Strahl
- 8: gebeugter Strahl
- 9: gebeugter Strahl
- 10: gebeugter Strahl
- 11: Beugungsmuster
- 12: Beugungsmuster
- 13: Beugungsmuster
- 14: Halterung
- 15: Pfeilrichtung
- 16: Pfeilrichtung
- 17: Objektiv
- 18: Kamera
- 19: Strahlengang
- 20: CCD-Chip
- 21: Bildfläche
- 22: Scanrichtung
- 23: Drehspiegel
- 24: telezentrischer Spiegel
- 25: Drehachse
- 26: Dokument

## Patentansprüche

1. Vorrichtung zur Auswertung von Echtheitsmerkmalen (4) mit wenigstens einer Beugungsstruktur (5) auf einem Dokument (26), das auf einer Untersuchungsfläche aufgelegt ist, mit einer Beleuchtungsquelle (1), die das zu untersuchende Echtheitsmerkmal (4) anstrahlt, wobei eine Auswerte-Einheit (2,17,18,20,21 oder 18, 20, 21) vorgesehen ist, auf die der vom Echtheitsmerkmal gebeugte Strahl projiziert wird, mit einer Mattscheibe (2), auf die die von der Beugungsstruktur abgeleiteten Beugungsmuster (11,12,13) gelenkt werden, und einer Kamera (18), die das auf der Mattscheibe abgebildete Beugungsbild erfasst, **dadurch gekennzeichnet, dass** die Mattscheibe verfahrbar ausgebildet ist und ein darauf fest liegender Spiegel (3, 3') vorgesehen ist, mittels dem die Strahlen (6) der Beleuchtungsquelle (1) in die Strahlen (7), die auf die Beugungsstruktur (5) auftreffen, umgelenkt werden.

2. Vorrichtung nach Anspruch 1, **dadurch gekennzeichnet, dass** die Kamera (18) eine Matrix- oder Zeilenkamera ist.

3. Vorrichtung nach einem der Ansprüche 1 oder 2, **dadurch gekennzeichnet, dass** sich der Spiegel über die gesamte Breite der Mattscheibe erstreckt.

4. Vorrichtung nach einem der Ansprüche 1 bis 3, **dadurch gekennzeichnet, dass** die Auswerte-Einheit das von der Kamera erfasste Bild auswertet.

5. Vorrichtung nach Anspruch 4, **dadurch gekennzeichnet, dass** die Auswerte-Einheit (2, 17, 18, 20, 21) lediglich einen Teilbereich der Mattscheibe (2) auswertet.

6. Vorrichtung nach einem der Ansprüche 1 bis 5, **dadurch gekennzeichnet, dass** die Beleuchtungsquelle (1) an der Mattscheibe (2) befestigt ist

7. Vorrichtung nach einem der Ansprüche 1 bis 5, **dadurch gekennzeichnet, dass** die Beleuchtungsquelle (1) verfahrbar ausgebildet ist

8. Vorrichtung nach einem der Ansprüche 1 bis 5, **dadurch gekennzeichnet, dass** die Beleuchtungsquelle (1) am Gehäuse feststehend ausgebildet ist und ein auslenkbarer Drehspiegel (23) vorgesehen ist, auf den die Strahlen (6) der Beleuchtungsquelle (1) gelenkt werden.

9. Vorrichtung nach einem der Ansprüche 1 bis 8, **dadurch gekennzeichnet, dass** als Beleuchtungsquelle ein Laser vorgesehen ist.

## Claims

1. Device for evaluating authenticity features (4) comprising at least one diffraction element (5) on a document (26) placed on an examination surface, comprising an illumination source (1) illuminating the authenticity feature (4) to be examined, an evaluating unit (2, 17, 18, 20, 21 or 18, 20, 21) being provided onto which the beam diffracted by the authenticity feature is projected, comprising a ground-glass screen (2) onto which the diffraction pattern (11, 12, 13) derived from the diffraction element is directed, and a camera (18) recording the diffraction pattern imaged on the ground-glass screen, **characterised in that** the ground-glass screen is movable and a mirror (3, 3') fixed thereon is provided, by means of which the beams (6) of the illumination source (1) are redirected into the beams (7) which strike the diffraction element (5).

2. Device according to claim 1, **characterised in that** the camera (18) is a matrix or line camera.

3. Device according to either claim 1 or 2, **characterised in that** the mirror extends over the whole width of the ground-glass screen.

4. Device according to any of claims 1 to 3, **characterised in that** the evaluating unit evaluates the image recorded by the camera.

5. Device according to claim 4, **characterised in that** the evaluating unit (2, 17, 18, 20, 21) evaluates only a portion of the ground-glass screen (2).

6. Device according to any of claims 1 to 5, **characterised in that** the illumination source (1) is fastened to the ground-glass screen (2).

7. Device according to any of claims 1 to 5, **characterised in that** the illumination source (1) is movable.

8. Device according to any of claims 1 to 5, **characterised in that** the illumination source (1) is fixed to the housing and a pivotable rotating mirror (23) is provided, onto which the beams (6) of the illumination source (1) are directed.

9. Device according any of claims 1 to 8, **characterised in that** the illumination source is a laser.

## Revendications

1. Dispositif pour évaluer des caractéristiques d'authenticité (4) avec au moins une structure de diffraction (5) sur un document (26) placé sur une surface d'examen, avec une source d'éclairage (1) qui éclaire la caractéristique d'authenticité (4) à évaluer, une unité d'exploitation (2, 17, 18, 20, 21 ou 18, 20, 21) étant prévue et sur laquelle sont projetés les rayons diffractés par la caractéristique d'authenticité, avec un verre dépoli (2) sur lequel sont dirigés les motifs de diffraction (11, 12, 13) obtenus de la structure de diffraction, et une caméra (18) qui saisit l'image de diffraction formée sur le verre dépoli, **caractérisé en ce que** le verre dépoli est conçu mobile et un miroir (3, 3') est prévu posé fixement sur celui-ci, au moyen duquel les rayons (6) de la source d'éclairage (1) sont déviés pour former les rayons (7) qui touchent la structure de diffraction (5).

2. Dispositif selon la revendication 1, **caractérisé en ce que** la caméra (18) est une caméra matricielle ou un une caméra linéaire.

3. Dispositif selon l'une des revendications 1 ou 2, **caractérisé en ce que** le miroir s'étend sur toute la largeur du verre dépoli.

4. Dispositif selon l'une des revendications 1 à 3, **caractérisé en ce que** l'unité d'exploitation exploite l'image saisie par la caméra.

5. Dispositif selon la revendication 4, **caractérisé en ce que** l'unité d'exploitation (2, 17, 18, 20, 21) n'exploite qu'une zone du verre dépoli (2).

6. Dispositif selon l'une des revendications 1 à 5, **caractérisé en ce que** la source d'éclairage (1) est fixée sur le verre dépoli (2).

7. Dispositif selon l'une des revendications 1 à 5, **caractérisé en ce que** la source d'éclairage (1) est conçue mobile.

8. Dispositif selon l'une des revendications 1 à 5, **caractérisé en ce que** la source d'éclairage (1) est conçue fixe sur le boîtier et un miroir pivotant (23) pouvant être dévié est prévu sur lequel les rayons (6) de la source d'éclairage (1) sont dirigés.

9. Dispositif selon l'une des revendications 1 à 8, **caractérisé en ce qu**'un laser est prévu comme source d'éclairage.
